# FASCICULE DE BREVET EUROPEEN

(11) **EP 2 092 404 B1**
(45) Date de publication et mention de la délivrance du brevet: **18.08.2010**
(21) Numéro de dépôt: 07866486.9
(22) Date de dépôt: 25.10.2007
(51) Int. Cl.: G05G 1/06, G05G 1/12, F16B 21/04, F16H 59/02

(54) **AGENCEMENT DEMONTABLE POUR LE VERROUILLAGE D'UN POMMEAU SUR LA TIGE D'UN LEVIER DE VITESSES D'UN VEHICULE AUTOMOBILE**
ABNEHMBARE VORRICHTUNG ZUR BEFESTIGUNG EINES KNAUFS AUF DER STANGE EINES GETRIEBES IN EINEM AUTOMOBIL
DISMOUNTABLE DEVICE FOR LOCKING A POMMEL ON THE ROD OF A GEAR LEVER IN AN AUTOMOTIVE VEHICLE

(30) Priorité: 20.12.2006 FR 0655684
(43) Date de publication de la demande: 26.08.2009
(73) Titulaire: RENAULT S.A.S., 92100 Boulogne Billancourt (FR)
(72) Inventeur: DESSAINT, Renaud, F-02840 Eppes (FR); GRASSIN, Jean, F-91370 Verrieres Le Buisson (FR); PONNET, Philippe, F-92500 Rueil Malmaison (FR)
(86) Numéro de dépôt international: PCT/FR2007/052242
(87) Numéro de publication internationale: WO 2008/081124

(56) Documents cités:
- DE-A1- 3 511 532
- DE-U1- 20 309 385
- FR-A- 2 879 523
- US-A1- 2003 106 387

## Description

L'invention concerne un agencement démontable pour le verrouillage d'un pommeau sur la tige d'un levier de changement de vitesses d'un véhicule automobile.

L'invention concerne plus précisément un agencement démontable pour le verrouillage d'un pommeau sur le tronçon supérieur d'extrémité libre de la tige d'un levier de changement de vitesses d'un véhicule automobile, du type comportant :
- le pommeau,
- le tronçon supérieur,
- des moyens de verrouillage en translation axiale du pommeau sur ledit tronçon de la tige, selon l'axe du tronçon,
- des moyens de verrouillage en rotation du pommeau sur le tronçon de la tige, autour de l'axe du tronçon.

Un levier de changement de vitesses d'un véhicule automobile comporte généralement une tige dont un tronçon d'extrémité libre supérieure est munie d'un pommeau verrouillé, pour la préhension et la manipulation du levier par le conducteur du véhicule et dont une seconde extrémité opposée est raccordée à une boîte de changement de vitesses.

Le pommeau et la tige du levier sont deux pièces distinctes qui sont verrouillées entre elles en vue de former un ensemble solidaire, notamment pour que le pommeau ne tourne pas, car ce dernier présente souvent une forme asymétrique et il doit, par conséquent, être orienté précisément sur la tige du levier et aussi dans l'habitacle.

De même, il est nécessaire que le pommeau soit verrouillé sur la tige du levier sans jeux, ni radial ni axial, pour le confort d'utilisation.

De plus, le pommeau et la tige du levier doivent être démontables, pour permettre par exemple le changement du pommeau.

Selon une solution technique de l'art antérieur, le pommeau est verrouillé en translation axiale et en rotation sur le tronçon d'extrémité libre de la tige du levier par emboîtement élastique.

Le document WO-A1-0201093 décrit un agencement mettant en oeuvre une telle solution technique.

Selon ce document, l'agencement comporte un pommeau équipé d'un alésage borgne ouvert vers le bas, dans lequel le tronçon d'extrémité libre globalement cylindrique de la tige d'un levier est apte à être verrouillé par emboîtement élastique.

A cet effet, l'alésage du pommeau comporte une languette de retenue qui fait saillie vers l'intérieur de l'alésage du pommeau et qui comporte une extrémité libre globalement tangente à l'axe dudit tronçon de la tige.

Le tronçon de la tige comporte une encoche qui est tangente à l'axe de la tige et qui est apte à coopérer avec ladite extrémité libre de la languette du pommeau.

Ainsi, lorsque le tronçon de la tige est introduit dans l'alésage du pommeau dans un mouvement de translation axiale, la languette agencée dans le pommeau se déforme au passage du tronçon jusqu'à ce que l'extrémité de la languette "tombe" dans l'encoche complémentaire du tronçon, grâce à quoi le pommeau occupe une position verrouillée dans laquelle la languette oppose une force de résistance à l'arrachement axial du pommeau selon un mouvement opposé au mouvement d'emboîtement.

De plus, lorsque le pommeau est verrouillé sur la tige, le tronçon de la tige comporte un méplat qui coopère avec une face complémentaire en vis-à-vis conformée dans l'alésage du pommeau, grâce à quoi le pommeau est verrouillé en rotation autour de la tige.

Un tel agencement permet un verrouillage simple et rapide du pommeau sur la tige du levier, par un mouvement d'emboîtement en translation axiale du pommeau sur la tige.

On peut également citer le brevet DE 3511532 qui est considéré comme représentant l'état de la technique le plus proche.

Cependant, un inconvénient de cet agencement est l'effort d'arrachement nécessaire pour déverrouiller le pommeau dans le but de le désolidariser de la tige.

En effet, cet effort d'arrachement doit être suffisamment élevé pour que le pommeau ne se désolidarise pas au cours de la manipulation du levier de vitesses par l'utilisateur et l'effort de mise en place doit être suffisamment faible pour permettre à un opérateur de le mettre en place sans effort excessif, ce qui est difficilement conciliable.

Afin de remédier notamment à cet inconvénient, l'invention propose un agencement permettant de dissocier l'effort nécessaire pour démonter le pommeau de la tige du levier, de l'effort auquel le pommeau doit résister au cours de son utilisation par le conducteur du véhicule.

Dans ce but, l'invention propose un agencement du type précédemment décrit, **caractérisé en ce que** les moyens de verrouillage en translation axiale sont du type à baïonnette et comportent :
- au moins un ergot qui s'étend radialement depuis la paroi concave intérieure d'un l'alésage du pommeau recevant axialement le tronçon de la tige,
- et au moins un logement qui est formé dans le tronçon de la tige et qui est délimité axialement par une première face axiale et par une seconde face axiale opposées, l'ergot étant apte à être engagé dans ledit logement par rotation du pommeau, de sorte que le pommeau est verrouillé en translation axiale sur le tronçon de la tige.

Selon d'autres caractéristiques de l'invention :
- le tronçon de la tige comporte :
   - une collerette annulaire inférieure dont la face axiale supérieure constitue la première face axiale du logement, et
   - une nervure axiale formée sur la face convexe du tronçon de la tige et dont la face axiale d'extrémité inférieure constitue la seconde face axiale du logement, et ladite face axiale d'extrémité inférieure de la nervure comporte une première lèvre qui est saillante axialement vers l'intérieur dudit logement et qui est apte à coopérer par déformation élastique avec une portion complémentaire de l'ergot, grâce à quoi le pommeau est monté sans jeu axial lorsqu'il est verrouillé en translation axiale sur le tronçon de la tige ;
- la nervure axiale du tronçon de la tige comporte, sur sa face radialement extérieure, une seconde lèvre qui est saillante radialement et qui est apte à coopérer par déformation élastique avec une portion complémentaire qui est conformée dans la paroi de l'alésage du pommeau ;
- l'agencement comporte un bouchon formant moyens de verrouillage en rotation du pommeau sur le tronçon, le bouchon conformant un doigt de verrouillage d'orientation axiale qui, en position engagé, est reçu sans jeu entre :
   - une première face de verrouillage formée dans le tronçon de la tige,
   - et une seconde face de verrouillage formée dans la paroi de l'alésage, lesdites faces de verrouillage étant en vis-à-vis, grâce à quoi le doigt s'oppose à la rotation du pommeau par rapport au tronçon de la tige ;
- ladite première face de verrouillage est un flanc radial de ladite nervure et ladite seconde face de verrouillage est une face radiale d'une rainure axiale de l'alésage du pommeau ;
- le doigt de verrouillage du bouchon est raccordé à une tête supérieure qui porte une vignette supérieure illustrant les différentes positions du levier de changement de vitesses ;
- le tronçon de la tige est un insert qui est solidaire de la tige et qui est réalisé par moulage en matière plastique.

D'autres caractéristiques et avantages de l'invention apparaîtront à la lecture de la description détaillée qui va suivre pour la compréhension de laquelle on se reportera aux dessins annexés dans lesquels :
- la figure 1 est une vue en section axiale illustrant un agencement selon l'invention qui comporte un pommeau verrouillé sur la tige d'un levier de vitesses ;
- la figure 2 est une vue éclatée en perspective illustrant les principaux composants de l'agencement de la figure 1 ;
- la figure 3 est une vue éclatée en section partielle illustrant l'alésage du pommeau et le tronçon d'extrémité libre de la tige du levier de vitesses ;
- la figure 4 est une vue schématique de dessous du pommeau illustrant les rainures du pommeau à travers lesquelles le tronçon de la tige du levier est apte à être engagé ;
- la figure 5 est une vue partielle en coupe radiale selon la ligne 5-5 de la figure 1 , illustrant l'agencement du tronçon de la tige dans l'alésage du pommeau, lorsque le pommeau occupe une position intermédiaire ;
- la figure 6 est une vue similaire à celle de la figure 5, illustrant l'agencement du tronçon de la tige dans l'alésage du pommeau lorsque le pommeau est en position verrouillée sur la tige ;
- la figure 7 est une vue en perspective de dessous illustrant le bouchon formant moyen de verrouillage en rotation du pommeau sur la tige ;
- la figure 8 est une vue en section selon la ligne 8-8 de la figure 1, illustrant le bouchon en position engagée dans l'alésage du pommeau et autour du tronçon de la tige du levier.

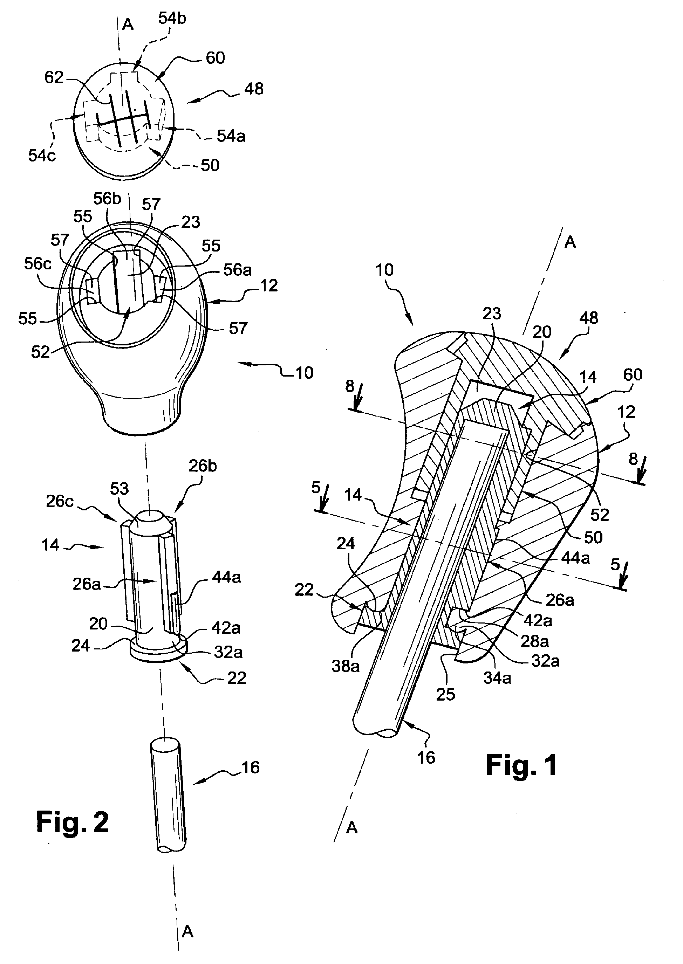

Dans la description qui va suivre, pour faciliter sa compréhension ainsi que celle des revendications, on adoptera à titre non limitatif et sans référence à la gravité terrestre, la terminologie verticale pour l'orientation générale de l'axe du tronçon supérieur d'extrémité libre de la tige du levier correspondant à l'orientation verticale des figures 1 à 3 et l'orientation horizontale pour les plans orthogonaux à l'axe vertical.

Des composants ou parties identiques, analogues ou similaires seront désignés par les mêmes chiffres de référence.

On a représenté à la figure 1 un agencement 10 comportant un pommeau 12 verrouillé sur un tronçon 14 supérieur d'extrémité libre d'une tige 16 d'un levier 18 de changement de vitesses.

Le tronçon 14 d'extrémité libre de la tige 16 est ici un insert qui est solidaire de la tige 16 et qui comporte un corps globalement cylindrique.

Le tronçon 14, ou insert, et le pommeau 12 sont par exemple réalisés par moulage en matière plastique.

Le tronçon 14 comporte, à son extrémité axiale inférieure, une collerette 22 annulaire qui s'étend depuis la face convexe du tronçon 14 et qui est délimitée par une face axiale supérieure annulaire 24 globalement horizontale.

De plus, le tronçon 14 comporte une première nervure 26a axiale qui s'étend radialement depuis la face convexe du tronçon 14.

La nervure 26a et la collerette 22 sont ici réalisés venues de matière avec le tronçon 14.

L'extrémité inférieure de la nervure 26a est délimitée par une face axiale inférieure 28a qui est globalement radiale horizontale.

Ainsi agencées, la face axiale supérieure 24 de la collerette 22 et la face axiale inférieure 28a de la nervure 26a délimitent entre elles un logement 32a qui est aussi délimité radialement par la face convexe du tronçon 14, comme on peut le voir à la figure 2.

Le pommeau 12 comporte un alésage débouchant 23 d'axe A-A vertical dans lequel est reçu le tronçon 14, lorsque le pommeau 12 est verrouillé sur le tronçon 14.

A cet effet, l'agencement 10 comporte des moyens de verrouillage en translation axiale du pommeau 12 sur le tronçon 14, qui sont ici du type à baïonnette.

Les moyens de verrouillage en translation comportent un premier ergot 34a qui est globalement parallélépipédique et qui s'étend radialement depuis la paroi concave 25 de l'alésage 23 du pommeau 12, vers l'axe de l'alésage 23.

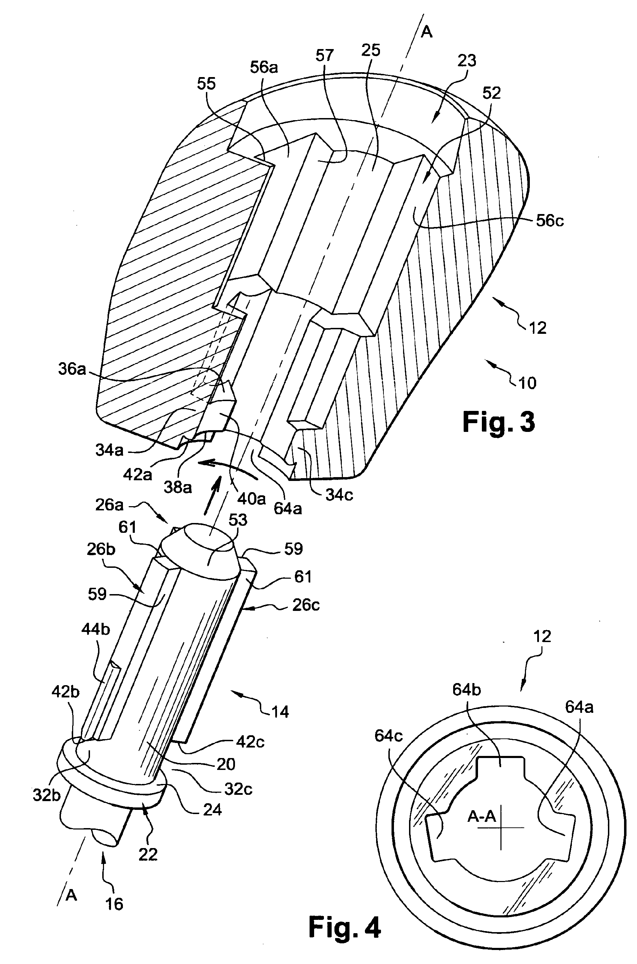

Comme on peut le voir à la figure 3, l'ergot 34a est délimité axialement par une face axiale supérieure 36a horizontale et par une face axiale inférieure 38a opposée, et il est délimité par une face d'extrémité radiale 40a.

L'ergot 34a est engagé dans le premier logement 32a du tronçon 14, lorsque le pommeau 12 est verrouillé, comme le montre la figure 1.

Afin de supprimer tout jeu axial, la face axiale inférieure 28a de la nervure 26a comporte une première lèvre 42a en saillie qui est bombée vers l'intérieur du logement 32a et qui coopère avec une portion complémentaire de la face axiale supérieure 36a de l'ergot 34a.

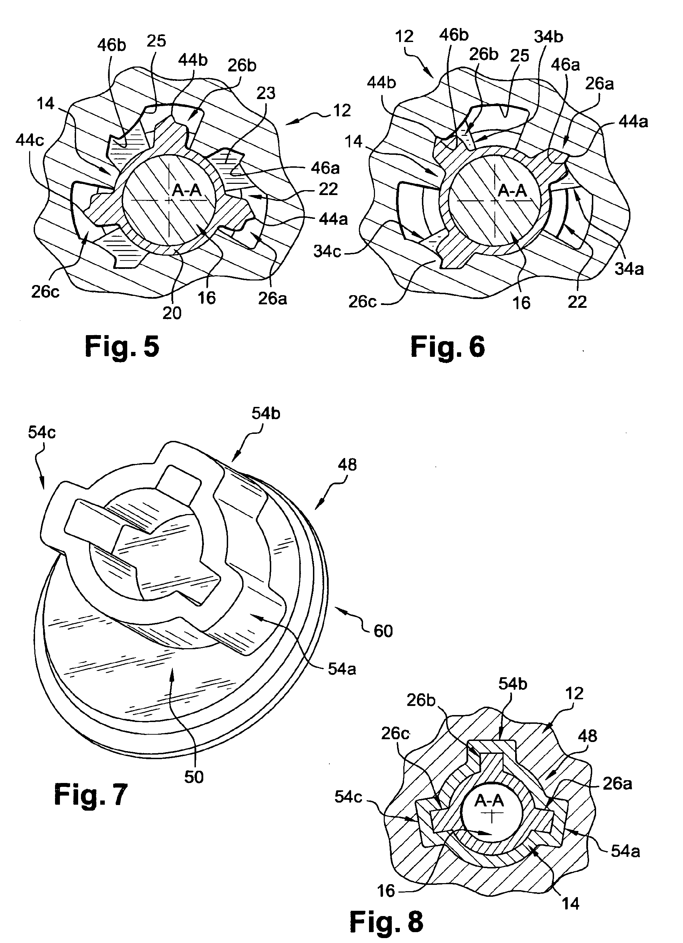

Comme on peut le voir à la figure 6, lorsque le pommeau 12 est verrouillé sur le tronçon 14, la nervure 26a du tronçon 14 est reçue sans jeu dans une rainure 46a complémentaire qui est formée dans la paroi 25 de l'alésage 23 du pommeau 12 et dans laquelle elle peut être montée comprimée élastiquement.

La nervure 26a du tronçon 14 comporte, sur sa face radialement extérieure, une seconde lèvre 44a qui est saillante radialement et qui s'étend axialement depuis l'extrémité axiale inférieure de la nervure 26a jusqu'à globalement la moitié de la nervure 26a, comme le montre la figure 1.

La seconde lèvre 44a coopère avec une portion complémentaire de la rainure 46a de l'alésage 23 du pommeau 12, de sorte que la nervure 26a du tronçon 14 s'oppose sensiblement au pivotement du pommeau 12, à la façon d'une dent reçue dans un cran.

L'agencement 10 comporte une deuxième partie et une troisième partie qui sont chacune référencées par les mêmes références que celles de la première partie et indicées par la lettre b et c respectivement.

La deuxième et la troisième parties sont identiques à la première partie précédemment décrite indicée par la lettre a, ces deux parties b et c ne seront par décrites en détails.

La deuxième partie référencée par la lettre b est décalée angulairement d'environ 100 degrés selon l'axe A-A du tronçon 14 par rapport à la première partie référencée par la lettre a et la troisième partie référencée par les lettre c est décalée angulairement d'environ 200 degrés selon l'axe A-A du tronçon 14 par rapport à la première partie référencée par la lettre a.

Ainsi, le tronçon 14 comporte une deuxième nervure 26b et une troisième nervure 26c, l'alésage 23 du pommeau 12 comporte un deuxième ergot 34b et un troisième ergot 34c qui sont chacun agencés dans un logement complémentaire 32b, 32c respectivement du tronçon 14.

Selon un autre aspect de l'invention, l'agencement 10 comporte des moyens de verrouillage en rotation du pommeau 12 sur le tronçon 14 de la tige 16, qui consistent en un bouchon 48 représenté en détail à la figure 7.

Le bouchon 48 comporte un corps axial en forme de jupe 50 globalement cylindrique qui comporte trois doigts axiaux 54a, 54b, 54c de section axiale en forme de "U" qui s'étendent radialement vers l'extérieur.

Comme l'illustre les figures 1, 2 et 8, la jupe 50 du bouchon 48 est engagée de manière serrée dans la partie supérieure 52 de l'alésage 23 du pommeau 12 et autour du tronçon 14 de la tige 16.

La partie supérieure 52 de l'alésage 23 comporte à cet effet trois rainures axiales 56a, 56b, 56c qui comportent chacune deux faces de verrouillage 55, 57 globalement radiales en vis-à-vis.

Comme on peut le voir sur la vue en section de la figure 8, chaque rainure axiale 56a, 56b, 56c est agencée en vis-à-vis d'une nervure 26a, 26b, 26c du tronçon 14 respectivement, lorsque le pommeau 12 occupe sa position verrouillée en pivotement.

Ainsi, lorsque le bouchon 48 est engagé dans l'alésage 23, chaque doigt 54a, 54b, 54c en forme de "U" de la jupe 50 entoure une portion supérieure complémentaire d'une nervure 26a, 26b, 26c du tronçon 14 respectivement, sensiblement sans jeu.

De plus, chaque doigt 54a, 54b, 54c coopère avec les deux faces de verrouillages 55, 57 des rainures axiales supérieures 56a, 56b, 56c du pommeau 12 respectivement et avec les deux flancs 59, 61 radiaux des nervures 26a, 26b, 26c du tronçon 14 respectivement, grâce à quoi le pommeau 12 et la tige 16 du levier 18 sont verrouillés en rotation autour de l'axe A-A.

L'extrémité supérieure de la jupe 50 du bouchon 48 est raccordée à une tête 60 qui porte une vignette 62 illustrant les différentes positions du levier 18 de changement de vitesses.

La tête 60 du bouchon 48 est ici affleurante avec la face extérieure du pommeau 12, lorsque le bouchon 48 est verrouillé dans le pommeau 12, comme le montre la figure 1.

Le pommeau 12 est mis en place sur le tronçon 14 de la tige 16 d'une manière telle que celle décrite par la suite.

La partie inférieure du pommeau 12 est engagée axialement sur le tronçon 14 de la tige 16.

A cet effet, la partie inférieure de l'alésage 23 du pommeau 12 est ouverte axialement et comporte trois rainures axiales inférieures 64a, 64b, 64c qui débouchent axialement vers le bas, comme le montre la figure 4, pour permettre l'engagement des nervures 26a, 26b, 26c du tronçon 14 dans l'alésage 23.

Les nervure 26a, 26b, 26c du tronçon 14 sont engagées dans les rainures inférieures 64a, 64b, 64c respectivement, jusqu'à ce que la face axiale inférieure 38a, 38b, 38c de chaque ergot 34a, 34b, 34c de l'alésage 23 entre en contact avec la face axiale supérieure 24 de la collerette 22 du tronçon 14 de la tige 16.

Le pommeau 12 occupe alors une position intermédiaire représentée à la figure 5.

Ensuite, le pommeau 12 est entraîné en rotation autour de l'axe A-A du tronçon 14 de la tige 16, jusqu'à ce que le pommeau 12 occupe une position représentée à la figure 6 dans laquelle il est verrouillé en translation axiale.

Au cours de cette rotation, les premières lèvres 42a, 42b, 42c et les secondes lèvres 44a, 44b, 44c des nervures axiale 26a, 26b, 26c respectivement, se déforment élastiquement au contact de l'ergot 34a, 34b, 34c associé pour les premières lèvres et au contact de la paroi 25 de l'alésage 23 pour les secondes lèvres.

Le pommeau 12 est entraîné en rotation jusqu'à ce que les nervures 26a, 26b, 26c du tronçon 14 viennent en butée contre les rainures 46a de l'alésage 23 respectivement.

Enfin, le bouchon 48 est engagé axialement vers le bas dans la partie supérieure 52 complémentaire de l'alésage 23, de sorte que la jupe 50 est engagée de manière serrée autour du tronçon 14 de la tige 16, jusqu'à ce que le bouchon 48 entre en butée avec le pommeau 12.

A cet effet, l'extrémité libre du tronçon 14 de la tige 16 comporte un chanfrein 53.

Les nervures 26a, 26b, 26c sont ici agencées angulairement de façon irrégulière autour de l'axe A-A, de sorte que les nervures forment un détrompeur pour à la fois éviter d'engager le pommeau 12 sur l'insert 14 et le bouchon 48 dans le pommeau 12, dans une mauvaise position.

## Revendications

1. Agencement (10) démontable pour le verrouillage d'un pommeau (12) sur le tronçon (14) supérieur d'extrémité libre de la tige (16) d'un levier (18) de changement de vitesses d'un véhicule automobile, du type comportant :
- le pommeau (12);
- le tronçon (14);
- des moyens de verrouillage en translation axiale du pommeau (12) sur ledit tronçon (14) de la tige (16), selon l'axe (A-A) du tronçon (14) ;
- des moyens de verrouillage en rotation du pommeau (12) sur le tronçon (14) de la tige (16), autour de l'axe (A-A) du tronçon (14) ;
les moyens de verrouillage en translation axiale sont du type à baïonnette et comportent :
- au moins un ergot (34a) qui s'étend radialement depuis la paroi (25) concave intérieure d'un alésage (23) du pommeau (12) recevant axialement le tronçon (14) de la tige (16) ;
- et au moins un logement (32a) qui est formé dans le tronçon (14) de la tige (16) et qui est délimité axialement par une première face axiale (24a) et par une seconde face axiale (28a) opposées, l'ergot (34a) étant apte à être engagé dans ledit logement (32a) par rotation du pommeau (12), de sorte que le pommeau (12) est verrouillé en translation axiale sur le tronçon (14) de la tige (16) ;
**caractérisé en ce que** l'agencement (10) comporte un bouchon (48) formant moyens de verrouillage en rotation du pommeau (12) sur le tronçon (14), le bouchon (48) conformant un doigt (54a) de verrouillage d'orientation axiale qui, en position engagé, est reçu sans jeu entre :
- une première face de verrouillage (59) formée dans le tronçon (14) de la tige (16),
- et une seconde face de verrouillage (55) formée dans la paroi (25) de l'alésage (23), lesdites faces de verrouillage (55, 59) étant en vis-à-vis, grâce à quoi le doigt (54a) s'oppose à la rotation du pommeau (12) par rapport au tronçon (14) de la tige (16).

2. Agencement (10) selon la revendication 1, **caractérisé en ce que** le tronçon (14) de la tige (16) comporte :
- une collerette (22) annulaire inférieure dont la face axiale supérieure (24) constitue la première face axiale (24) du logement (32a), et
- une nervure axiale (26a) formée sur la face convexe du tronçon (14) de la tige (16) et dont la face axiale d'extrémité inférieure (28a) constitue la seconde face axiale (28a) du logement (32a),
et **en ce que** ladite face axiale d'extrémité inférieure (28a) de la nervure (26a) comporte une première lèvre (42a) qui est saillante axialement vers l'intérieur dudit logement (32a) et qui est apte à coopérer par déformation élastique avec une portion complémentaire de l'ergot (34a), grâce à quoi le pommeau (12) est monté sans jeu axial lorsqu'il est verrouillé en translation axiale sur le tronçon (14) de la tige (16).

3. Agencement (10) selon la revendication précédente, **caractérisé en ce que** la nervure axiale (26a) du tronçon (14) de la tige (16) comporte, sur sa face radialement extérieure, une seconde lèvre (44a) qui est saillante radialement et qui est apte à coopérer par déformation élastique avec une portion complémentaire qui est conformée dans la paroi (25) de l'alésage (23) du pommeau (12).

4. Agencement (10) selon l'une quelconque des revendications précédentes, **caractérisé en ce que** ladite première face de verrouillage (59) est un flanc (59) radial de ladite nervure (26a) et ladite seconde face de verrouillage (55) est une face radiale d'une rainure (56a) axiale de l'alésage (23) du pommeau (12).

5. Agencement (10) selon la revendication 1, **caractérisé en ce que** le doigt (54a) de verrouillage du bouchon (48) est raccordé à une tête (60) supérieure qui porte une vignette (62) supérieure illustrant les différentes positions du levier (18) de changement de vitesses.

6. Agencement (10) selon l'une quelconque des revendications précédentes, **caractérisé en ce que** le tronçon (14) de la tige (16) est un insert qui est solidaire de la tige (16) et qui est réalisé par moulage en matière plastique.

## Claims

1. Dismountable arrangement (10) for locking a pommel (12) on the upper free-end section (14) of the rod (16) of a motor vehicle gear lever (18), of the type comprising:
- the pommel (12);
- the section (14);
- means for locking the pommel (12) on the said section (14) of the rod (16) against axial translation on the axis (A-A) of the section (14);
- means for locking the pommel (12) on the section (14) of the rod (16) against rotation about the axis (A-A) of the section (14);
the means for locking against axial translation being of the bayonet type and comprising:
- at least one pin (34a) which extends radially from the concave interior wall (25) of a bore (23) of the pommel (12) that axially receives the section (14) of the rod (16);
- and at least one housing (32a) which is formed in the section (14) of the rod (16) and which is axially delineated by a first axial face (24a) and by a second axial face (28a) the faces being opposite, the pin (34a) being able to be engaged in the said housing (32a) by turning the pommel (12) so that the pommel (12) is locked against axial translation on the section (14) of the rod (16);
**characterized in that** the arrangement (10) comprises a plug (48) forming means for locking the pommel (12) against rotation on the section (14), the plug (48) forming an axially oriented locking finger (54a) which, in the engaged position, is housed without clearance between:
- a first locking face (49) formed in the section (14) of the rod (16),
- and a second locking face (55) formed in the wall (25) of the bore (23), the said locking faces (55, 59) facing one another, by virtue of which the finger (54a) opposes any turning of the pommel (12) with respect to the section (14) of the rod (16) .

2. Arrangement (10) according to Claim 1, **characterized in that** the section (14) of the rod (16) comprises:
- a lower annular flange (22) the upper axial face (24) of which constitutes the first axial face (24) of the housing (32a), and
- an axial rib (26a) formed on the convex face of the section (14) of the rod (16) and the lower end axial face (28a) of which constitutes the second axial face (28a) of the housing (32a),
and **in that** the said lower end axial face (28a) of the rib (26a) has a first lip (42a) which projects axially towards the inside of the said housing (32a) and is able to collaborate by elastic deformation with a complementary portion of the pin (34a), by virtue of which the pommel (12) is mounted without axial clearance when locked against axial translation on the section (14) of the rod (16).

3. Arrangement (10) according to the preceding claim, **characterized in that** the axial rib (26a) of the section (14) of the rod (16) comprises, on its radially outer face, a second lip (44a) which projects radially and is able to collaborate by elastic deformation with a complementary portion which is formed in the wall (25) of the bore (23) of the pommel (12).

4. Arrangement (10) according to any one of the preceding claims, **characterized in that** the said first locking face (59) is a radial flank (59) of the said rib (26a) and the said second locking face (55) is a radial face of an axial groove (56a) in the bore (23) of the pommel (12).

5. Arrangement (10) according to Claim 1, **characterized in that** the locking finger (54a) of the plug (48) is connected to an upper head (60) which bears an upper vignette (62) illustrating the various positions of the gear lever (18).

6. Arrangement (10) according to any one of the preceding claims, **characterized in that** the portion (14) of the rod (16) is an insert which is secured to the rod (16) and which is moulded in plastic.

## Patentansprüche

1. Abmontierbare Anordnung (10) zur Verriegelung eines Knaufs (12) auf dem freien oberen Endteilstück (14) der Stange (16) eines Gangschaltungshebels (18) eines Kraftfahrzeugs, von der Art, die aufweist:
- den Knauf (12);
- den Teilstück (14);
- Einrichtungen zur axialen Translationsverriegelung des Knaufs (12) auf dem Teilstück (14) der Stange (16) gemäß der Achse (A-A) des Teilstücks (14);
- Einrichtungen zur Drehverriegelung des Knaufs (12) auf dem Teilstück (14) der Stange (16) um die Achse (A-A) des Teilstücks (14);
wobei die Einrichtungen zur axialen Translationsverriegelung von der Art Bajonettverriegelung sind und aufweisen:
- mindestens einen Zapfen (34a), der sich radial von der konkaven Innenwand (25) einer Bohrung (23) des Knaufs (12) erstreckt, die axial das Teilstück (14) der Stange (16) aufnimmt;
- und mindestens eine Aufnahme (32a), die in dem Teilstück (14) der Stange (16) geformt ist und axial von einer ersten axialen Seite (24a) und von einer zweiten axialen Seite (28a) begrenzt wird, die einander gegenüberliegen, wobei der Zapfen (34a) durch Drehen des Knaufs (12) derart in die Aufnahme (32a) eingeführt werden kann, dass der Knauf (12) in axialer Translationsbewegung auf dem Teilstück (14) der Stange (16) verriegelt wird;
**dadurch gekennzeichnet, dass** die Anordnung (10) eine Verschlusskappe (48) aufweist, die eine Drehverriegelungseinrichtung des Knaufs (12) auf dem Teilstück (14) bildet, wobei die Verschlusskappe (48) einen Verriegelungsfinger (54a) mit axialer Ausrichtung ausbildet, der in der eingeführten Stellung ohne Spiel aufgenommen wird zwischen:
- einer ersten Verriegelungsseite (59), die im Teilstück (14) der Stange (16) geformt ist,
- und einer zweiten Verriegelungsseite (55), die in der Wand (25) der Bohrung (23) geformt ist, wobei die Verriegelungsseiten (55, 59) einander gegenüberliegen, wodurch der Finger (54a) der Drehung des Knaufs (12) bezüglich des Teilstücks (14) der Stange (16) entgegenwirkt.

2. Anordnung (10) nach Anspruch 1, **dadurch gekennzeichnet, dass** das Teilstück (14) der Stange (16) aufweist :
- einen unteren ringförmigen Kragen (22), dessen obere axiale Seite (24) die erste axiale Seite (24) der Aufnahme (32a) bildet, und
- eine axiale Rippe (26a), die auf der konvexen Seite des Teilstücks (14) der Stange (16) geformt ist und deren untere axiale Endseite (28a) die zweite axiale Seite (28a) der Aufnahme (32a) bildet,
und dass die untere axiale Endseite (28a) der Rippe (26a) eine erste Lippe (42a) aufweist, die axial ins Innere der Aufnahme (32a) vorsteht und durch elastische Verformung mit einem komplementären Abschnitt des Zapfens (34a) zusammenwirken kann, wodurch der Knauf (12) ohne axiales Spiel montiert ist, wenn er in axialer Translationsbewegung auf dem Teilstück (14) der Stange (16) verriegelt wird.

3. Anordnung (10) nach dem vorhergehenden Anspruch, **dadurch gekennzeichnet, dass** die axiale Rippe (26a) des Teilstücks (14) der Stange (16) auf ihrer radial äußeren Seite eine zweite Lippe (44a) aufweist, die radial vorsteht und durch elastische Verformung mit einem komplementären Abschnitt zusammenwirken kann, der in der Wand (25) der Bohrung (23) des Knaufs (12) ausgebildet ist.

4. Anordnung (10) nach einem der vorhergehenden Ansprüche, **dadurch gekennzeichnet, dass** die erste Verriegelungsseite (59) eine radiale Flanke (59) der Rippe (26a) und die zweite Verriegelungsseite (55) eine radiale Seite einer axialen Nut (56a) der Bohrung (23) des Knaufs (12) ist.

5. Anordnung (10) nach Anspruch 1, **dadurch gekennzeichnet, dass** der Verriegelungsfinger (54a) der Verschlusskappe (48) mit einem oberen Kopf (60) verbunden ist, der eine obere Plakette (62) trägt, die die verschiedenen Stellungen des Gangschaltungshebels (18) veranschaulicht.

6. Anordnung (10) nach einem der vorhergehenden Ansprüche, **dadurch gekennzeichnet, dass** das Teilstück (14) der Stange (16) ein Einsatz ist, der fest mit der Stange (16) verbunden und durch Formen aus Kunststoff hergestellt ist.
